# EUROPEAN PATENT APPLICATION

(11) **EP 3 845 763 A1**
(43) Date of publication of application: **07.07.2021**
(21) Application number: 20215313.6
(22) Date of filing: 18.12.2020
(51) Int. Cl.: F04D 1/00, F04D 13/06, F04D 29/20, H02K 1/27, H02K 1/30, H02K 5/128

(54) **CYLINDRICAL MOUNTING SLEEVE WITH AN ELONGATED PROTRUSION ON AN INNER SURFACE**

(30) Priority: 31.12.2019 DK PA201901563
(71) Applicant: Grundfos Holding A/S, 8850 Bjerringbro (DK)
(72) Inventor: SØRENSEN, Allan Ivo Søgaard, 9500 Hobro (DK)
(74) Representative: Guardian IP Consulting I/S

(57) **Abstract**

A cylindrical mounting sleeve suitable for mounting a rotor assembly on a shaft, said cylindrical mounting sleeve comprising a hollow cylindrical portion having a length L and an inner surface with a radius R, said cylindrical mounting sleeve further comprising at least one elongated protrusion formed on the inner surface, the elongated protrusion having a height H. The path of the elongated protrusion forms an angle A to the longitudinal centre axis of the hollow cylindrical portion, said angle A being greater than 5 degrees and less than 70 degrees. In this way, a mounting sleeve is provided which reduces the damage during mounting of the sleeve on the shaft. This reduces imbalance in the rotor assembly. The invention also relates to a rotor assembly comprising such a cylindrical mounting sleeve.

## Description

The current invention relates to a cylindrical mounting sleeve suitable for mounting a rotor assembly on a shaft, said cylindrical mounting sleeve comprising a hollow cylindrical portion having a length L and an inner surface with a diameter D, said cylindrical mounting sleeve further comprising at least one elongated protrusion formed on the inner surface, the elongated protrusion having a height H. The current invention also relates to a rotor assembly comprising a cylindrical mounting sleeve.

### Description of related art

Electrical motors typically comprise a stationary stator and a rotating rotor arranged inside the stator. When assembling the electrical motor, the rotor needs to be mechanically mounted on a rotating shaft. The shaft is then rotationally supported inside the motor housing. The fixed mechanical connection between the rotor and the shaft will cause the shaft to turn when the rotor turns. Depending on the application of the motor, the shaft can be connected to different devices. In the current specification, an example of a small hydraulic pump is provided. In this example, the motor shaft is connected to the impeller of the pump to drive the impeller in a rotational manner. However, the current invention should not be limited to hydraulic pumps, but can be used in many different applications.

In the prior art, there are many different techniques to mount a rotor on a shaft. These known techniques all have advantages and disadvantages. One additional complication, which occurs in certain applications, for example the pump example provided in the current specification, is that the rotor is arranged in contact with the fluid which the pump is pumping. This is often called a wet rotor. In such cases, certain components of the rotor might need to be protected from the fluid of the pump. Especially in the case where the rotor comprises a permanent magnet and the rotor is arranged in contact with the pumping fluid, the permanent magnet needs to be protected from the fluid since certain types of permanent magnets lose their performance when they get wet.

One example of a prior art example of a wet rotor is disclosed in EP2940833. In this case, the rotor assembly comprises an inner cylindrical mounting sleeve, a cylindrical magnet assembly arranged around the inner cylindrical mounting sleeve, two annular end flanges on either side of the magnet assembly and an outer cylindrical sleeve. The end flanges are welded together with the inner and outer sleeves to form a sealed enclosure around the cylindrical magnet. The inner sleeve is formed with inwardly extending elongated protrusions or ridges to act as spring elements to form an elastic engagement with the shaft and absorb any tolerances when the rotor assembly is press fitted onto the shaft.

Another prior art example of a wet rotor is disclosed in EP2511532. In this case, a similar construction as above is provided, however, slots or grooves are formed on the shaft and the inner cylindrical sleeve has a smooth circular inner surface. When the inner sleeve is press fitted onto the shaft, the inner surface of the inner cylindrical sleeve will deform and engage with the slots/grooves on the shaft to hold the shaft and inner cylindrical sleeve tightly together.

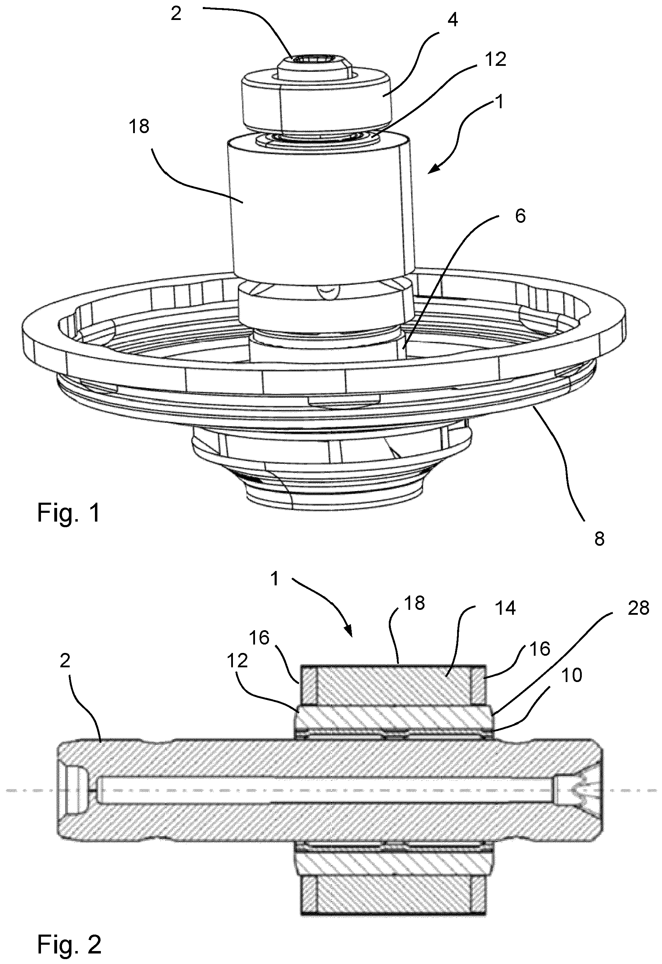

The applicants own prior art wet rotor assembly procedure is described in more detail with respect to figures 1 to 6 in the description below.

One drawback of many of the prior art wet rotor assemblies is that the procedure requires that the rotor assembly is balanced prior to being used in a motor assembly. This balancing step requires time in the manufacturing process and slows the process down. It also adds costs to the process.

### Summary of the invention

A first aspect of the current invention is therefore to provide a cylindrical mounting sleeve for a rotor assembly and a rotor assembly with a cylindrical mounting sleeve which reduces the need for a balancing operation.

A second aspect of the current invention is to provide a cylindrical mounting sleeve for a rotor assembly and a rotor assembly with a cylindrical mounting sleeve which reduces the cost of the rotor assembly.

These aspects are provided at least in part by a cylindrical mounting sleeve according to claim 1 and a rotor assembly according to claim 9.

According to this specification, the path of the elongated protrusion should be understood as the path along which the elongated protrusion extends along the inner surface of the hollow cylindrical portion. The angle A of the path at a point should be understood as the angle formed between the centre axis of the hollow cylindrical portion and a projection of the tangent vector to the path at that point onto a plane which intersects the centre axis of the hollow cylindrical portion. If the angle A at different points along the path is different, then in one embodiment, the average of the angle A should fall within the limits defined in the claims.

In one embodiment the angle A is greater than 10 degrees, greater than 20 degrees or greater than 30 degrees. In one embodiment, the angle A is less than 60 degrees, less than 50 degrees or less than 45 degrees.

In one embodiment, the at least one elongated protrusion extends around at least 360 degrees of the inner surface of the cylindrical mounting sleeve. By extending the protrusion around a larger circumference, the loads on the projection will be reduced.

By extending around at least X degrees of the inner surface, is meant that the protrusion is arranged such that a projection of the path of the protrusion onto a plane which is perpendicular to the longitudinal centre axis will have be an arc of at least X degrees. In one embodiment, the elongated protrusion extends around at least 600 degrees, at least 900 degrees or at least 1200 degrees of the inner surface of the cylindrical mounting sleeve.

In one embodiment, the length of the elongated protrusion is greater than the diameter of the hollow cylindrical portion, greater than 2 times the diameter of the hollow cylindrical portion or greater than 4 times the diameter of the hollow cylindrical portion.

In one embodiment, the cylindrical mounting sleeve comprises an outer surface having at least one elongated depression which correspond to the at least one elongated protrusion on the inner surface. In one embodiment of a manufacturing operation, the at least one elongated depression is pressed into the outer surface of the cylindrical mounting sleeve to form the at least one elongated protrusion on the inner surface of the cylindrical mounting sleeve. It should be noted that the terms depressions/protrusions should be interpreted broadly. The main concept being that there is a portion which has a different diameter that the inner surface of the hollow cylindrical portion. This difference in diameter provides a spring effect which allows deformation of the sleeve to achieve a strong connection between the shaft and the sleeve even in the presence of manufacturing tolerances.

In one embodiment, the cylindrical mounting sleeve comprises a slit along the length of the cylindrical mounting sleeve. In this way, the cylindrical mounting sleeve can manufactured from a flat plate metal element which has been rolled into a cylinder. In one embodiment, the slit extends from one end of the cylindrical mounting sleeve to the other end of the cylindrical mounting sleeve. In one embodiment, the slit has been welded shut. In this way, the mounting sleeve can form a part of a sealed enclosure of the rotor assembly.

In one embodiment, the at least one elongated protrusion is formed as a helical path. In one embodiment, the helical path extends from one end of the sleeve to the other end of the sleeve. A helical path has the advantage of providing a constant point of contact between the shaft and the sleeve but which rotates around the circumference of the sleeve.

In one embodiment, the cylindrical mounting sleeve comprises a plurality of elongated protrusions on the inner surface of the hollow cylindrical portion, said plurality of elongated protrusions being spaced around the circumference of the cylindrical mounting sleeve. In one embodiment, the plurality of elongated protrusions are evenly spaced around the circumference of the hollow cylindrical portion. By providing multiple protrusions, the sleeve can be in contact with multiple points on the shaft at one time.

In one embodiment, the elongated protrusion(s) are made up of spaced apart individual segments which together form an elongated protrusion.

The invention also relates to a rotor assembly comprising a shaft, a magnet assembly and an enclosure around the magnet assembly, said enclosure being mounted to the shaft via a cylindrical mounting sleeve as described above. In one embodiment, the cylindrical mounting sleeve is rotationally and axially fixed in position between the shaft and the magnet assembly.

In one embodiment, the enclosure is a sealed enclosure and the cylindrical mounting sleeve forms an integral component of the sealed enclosure. In one embodiment, the cylindrical mounting sleeve forms an outer wall of the sealed enclosure.

In one embodiment, the cylindrical mounting sleeve is first press fitted onto a shaft and then the enclosure is assembled around the cylindrical mounting sleeve. In one embodiment, the enclosure is assembled first and then is pressed onto a shaft together with the cylindrical mounting sleeve.

It should be emphasized that the term "comprises/comprising/comprised of' when used in this specification is taken to specify the presence of stated features, integers, steps or components but does not preclude the presence or addition of one or more other features, integers, steps, components or groups thereof.

### Brief description of the drawings

Figure 1 shows a perspective view of a prior art wet rotor assembly for a hydraulic pump unit.
Figure 2 shows a cross sectional view of a portion of the wet rotor assembly of figure 1.
Figures 3-5 show perspective views of the rotor assembly of figure 1 with some different components removed to show details of the rotor assembly construction.
Figure 6 shows a perspective view of the cylindrical mounting sleeve used to mount the rotor assembly of figures 1-5 on the shaft.
Figure 7a schematically shows a top view of a first embodiment of a cylindrical mounting sleeve according to the current invention.
Figure 7b schematically shows a side view of the cylindrical mounting sleeve of figure 7a.
Figure 8 schematically shows a cross sectional view of a first embodiment of a rotor assembly with a cylindrical mounting sleeve as shown in figures 7a and 7b.
Figure 9 schematically shows a top view of a second embodiment of a cylindrical mounting sleeve according to the current invention.
Figure 10 schematically shows a cross sectional view of a second embodiment of a rotor assembly with a cylindrical mounting sleeve as shown in figure 9.
Figure 11 schematically shows a top view of a third embodiment of a cylindrical mounting sleeve according to the current invention.
Figure 12 schematically shows a top view of a fourth embodiment of a cylindrical mounting sleeve according to the current invention.
Figure 13 schematically shows a top view of a fifth embodiment of a cylindrical mounting sleeve according to the current invention.
Figure 14 schematically shows a top view of a sixth embodiment of a cylindrical mounting sleeve according to the current invention.
Figure 15 schematically shows a top view of a seventh embodiment of a cylindrical mounting sleeve according to the current invention.
Figure 16 schematically shows a cross sectional view of a rotor assembly assembled with the seventh embodiment of a cylindrical mounting sleeve shown in figure 15.
Figure 17 schematically shows a top view of an eighth embodiment of a cylindrical mounting sleeve according to the current invention.
Figure 18 schematically shows a top view of a ninth embodiment of a cylindrical mounting sleeve according to the current invention.
Figure 19 schematically shows a top view of a tenth embodiment of a cylindrical mounting sleeve according to the current invention.
Figure 20 schematically shows a top view of an eleventh embodiment of a cylindrical mounting sleeve according to the current invention.

In the following, the invention will be described in greater detail with reference to embodiments shown by the enclosed figures. It should be emphasized that the embodiments shown are used for example purposes only and should not be used to limit the scope of the invention.

### Detailed description of the embodiments

Figures 1-6 illustrate a prior art solution for mounting a wet rotor assembly 1 on a shaft 2. In addition to the rotor assembly, in figure 1, bearings 4, 6 and a pump impeller 8 are shown. A motor stator (not shown) will be arranged around the rotor assembly 1 and drive the rotor assembly, shaft and impeller 8 in a rotating motion.

The rotor assembly, as shown in the cross sectional view of figure 2, comprises an inner cylindrical mounting sleeve 10, a cylindrical back iron portion 12, a permanent magnet assembly 14 arranged around the circumference of the back iron portion 12, annular side flanges 16 and an outer cylindrical sleeve 18. The general construction and design of a rotor assembly based on a permanent magnet assembly is well known in the art and will not be described in detail herein.

During assembly, the inner cylindrical mounting sleeve 10 is inserted into the hollow centre portion of the cylindrical back iron portion 12. The sleeve and back iron portion are then press fitted onto the shaft 2. Due to the form of the mounting sleeve 10, the mounting sleeve will deform slightly to absorb any tolerances and ensure a tight frictional fit between the shaft 2 and the back iron portion 12. Once the sleeve and back iron portion are fixed on the shaft, the magnet assembly 14 is arranged on the back iron portion, the outer sleeve 18 is placed over the magnet assembly and then the annular side flanges 16 are pressed into the outer sleeve and onto the back iron portion on either side of the magnet assembly. The outer circumference of the annular side flanges is then welded to the outer sleeve and the inner circumference of the annular side flanges is welded to the back iron. In this way, a sealed enclosure is provided around the magnet. In certain embodiments, the outer sleeve is oversized and extends past the annular side flanges. Prior to, or after, welding the rotor assembly together, the oversized portion of the outer sleeve can be trimmed off.

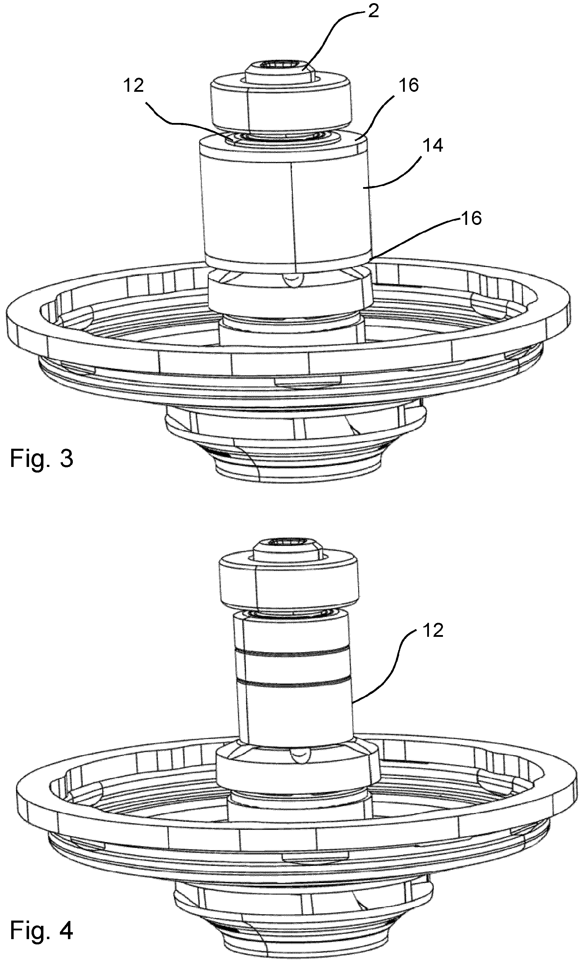

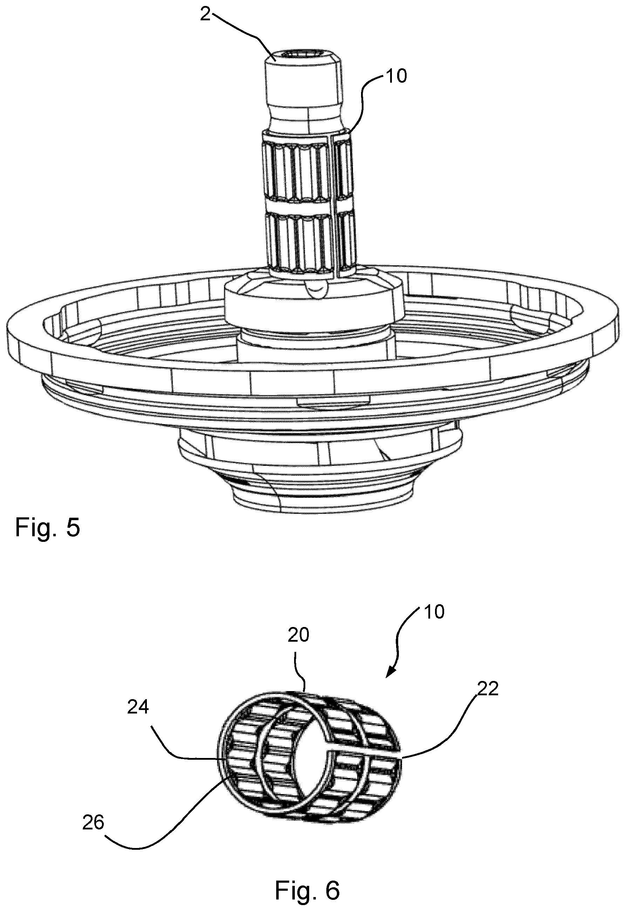

Figure 3 shows the rotor assembly with the outer cylindrical sleeve 18 removed. In figure 3, the cylindrical magnet assembly 14 and the annular side flanges 16 can be seen. Figure 4 shows the rotor assembly with the magnet assembly 14 and the annular side flanges 16 further removed. The back iron 12 can therefore be seen in figure 4. Figure 5 shows the rotor assembly with the back iron portion 12 further removed. The inner cylindrical mounting sleeve 10 can now be seen placed on the shaft.

Figure 6 shows a perspective view of the inner cylindrical mounting sleeve 10. The inner cylindrical sleeve is manufactured from a plate metal sheet which has been rolled into a cylinder. Since the cylindrical sleeve is formed from a plate which is rolled into a cylinder, the inner cylindrical mounting sleeve 10 has a slot 22 at the location where the two edges of the rolled up plate meet. The surface 20 of the cylindrical sleeve has been formed into a series of waves via a pressing operation with peaks 24 extending outwardly from the outer surface of the cylindrical sleeve and valleys 26 which extend inwardly from the inside surface of the cylinder towards the centre of the cylindrical sleeve. The valleys 26 are in contact with the shaft 2 when the cylindrical sleeve is mounted on the shaft and the peaks are in contact with the inner surface of the cylindrical back iron 12. The wavy shape of the cylindrical sleeve will allow the inner cylindrical sleeve to act as a form of spring. The distance between the valleys and the peaks will change when the cylindrical mounting sleeve is pressed onto the shaft together with the cylindrical back iron portion 12. This allows the cylindrical mounting sleeve 10 to adapt to any manufacturing tolerances which might be present in the shaft and/or in the back iron portion and/or in the inner cylindrical sleeve.

Likewise, the slot 22 in the sleeve will provide an extra measure to allow the sleeve to adapt to tolerances in the thickness of the sheet from which the sleeve is made as well as to any tolerances in the manufacture of the inner sleeve.

Once the rotor assembly has been mounted on the shaft, the rotor assembly is balanced by drilling small holes in the exposed sides 28 of the cylindrical back iron portion 12. The number, size and placement of the holes is chosen on a per rotor assembly basis to balance the specific rotor assembly. In this way, any imbalance in the rotor assembly can be compensated for by the material which is removed via the drilling of the holes. However, since each rotor needs to be balanced individually, this is a time consuming and therefore expensive operation.

The above described rotor assembly is well known and has been used for a number of years. The inventors of the current invention have however, noted that when the inner cylindrical sleeve is pressed onto the shaft, some form of damage will often occur to the inner cylindrical sleeve when the shaft is much harder than the sleeve or to the shaft when the sleeve is harder than the shaft. This damage has a tendency to contribute significantly to the imbalance in the assembled rotor assembly.

The inventors have therefore developed a new type of inner cylindrical sleeve where elongated protrusions (valleys) on the inner surface of the inner cylindrical sleeve are arranged such that the path of the elongated protrusions form an angle to the longitudinal centre axis of the inner cylindrical sleeve. In this way, when the sleeve is pressed onto the shaft, the point of contact between the elongated protrusions of the inner cylindrical sleeve and the outer surface of the shaft, will not be at a constant circumferential position, but will move around the circumference as the sleeve is displaced in the axial direction of the shaft.

In contrast, in the prior art solution where elongated protrusions run along the longitudinal axis of the sleeve, as the sleeve is pushed onto the shaft, any damage to the sleeve or to the shaft, will continue along an entire elongated protrusion of the sleeve and/or along the entire length of the shaft which is in contact with the sleeve when the sleeve is pressed onto the shaft. This is especially true if the shaft is made of a very hard material, for example ceramics. In this case, in certain situations, the shaft will cut a metal shaving from the inner surface of one or more of the elongated protrusions of the inner surface of the inner cylindrical sleeve as the sleeve is pushed onto the shaft. The metal shaving will therefore reduce the weight of the inner sleeve at the location where the metal shaving is removed. This will cause a weight imbalance.

In addition, when the metal shaving is removed on one or more portions of the inner surface of the inner sleeve, the centre of the rotor assembly is affected, as it will shift slightly off centre. This will cause both a mechanical imbalance as well as a magnetic imbalance.

According to the current invention, when an arrangement of the inner sleeve is provided where the path of an elongated protrusion forms an angle to the longitudinal centre axis of the sleeve, the above described problems with the damage/shavings will be much reduced. Since the point of contact between the sleeve and the shaft will change constantly, there will not be a material reduction at a specific circumferential position. Hence, the weight balance of the rotor assembly will be much less affected and the rotor assembly centre will be much more centred with respect to the shaft.

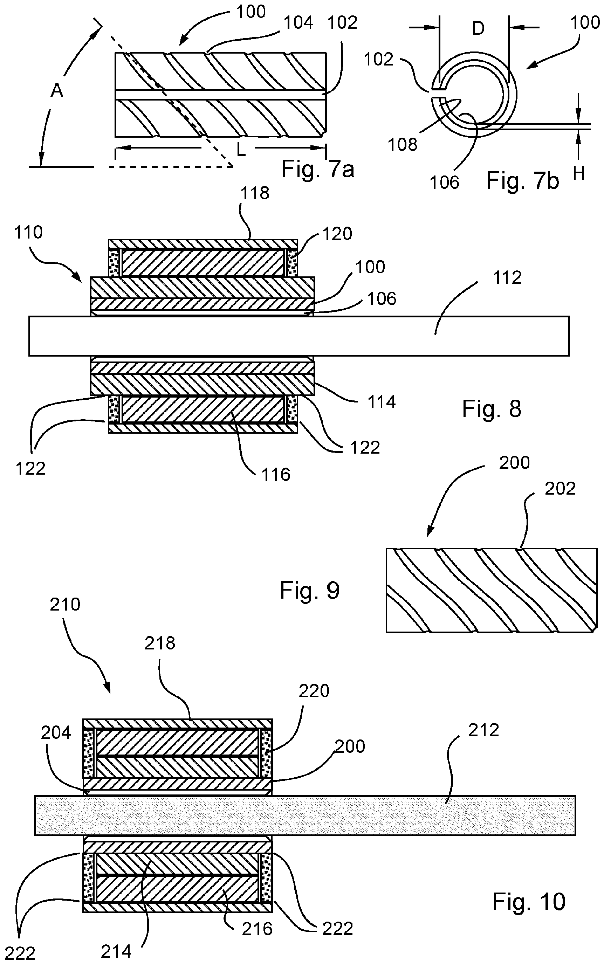

Figures 7a and 7b shows a first embodiment 100 of a cylindrical mounting sleeve according to the current invention. As with the prior art sleeves, in this case, the sleeve is made from a flat metal sheet which has been rolled into a sleeve. As with the prior art sleeves, there is also a slot 102 in this embodiment at the location where the two side edges of the plate meet when rolled up. The slot is able to function as a form of tolerance absorber in the case where the thickness of the metal sheet varies. The outer surface of the plate is formed with an elongated depression 104 which is pressed into the material of the plate. This creates a corresponding elongated protrusion 106 on the inside surface 108 of the sleeve. The inside surface 108 is formed as a hollow cylindrical portion 108 with an inner diameter D. The protrusion 106 has a height H.

However, in contrast to the prior art sleeve where the elongated protrusions / depressions (peaks and valleys) ran along the longitudinal axis of the sleeve, in this embodiment, the elongated protrusions and depressions are arranged at an angle A to the longitudinal centre axis of the sleeve. In this case, the protrusions are formed as a number of helixes which wrap themselves around the inner surface of the hollow cylindrical portion. It should be noted again, that the figures are shown schematically to illustrate the concept and are not to be interpreted as correctly dimensioned specific examples.

Figure 8 shows how the sleeve is used to mount a rotor assembly 110 on a shaft 112. The constructions is, to a great extent, identical to the prior art method of assembling the rotor assembly on the shaft as described above and will not be described in detail here.

The rotor assembly 110 comprises the inner cylindrical mounting sleeve 100 with ridges 106 extending in towards and contacting the shaft 112, a cylindrical back iron portion 114, a magnet assembly 116, an outer sleeve 118 and two annular side flanges 120. The annular side flanges 120 are welded to the outer sleeve 118 and the back iron portion 114 at the locations marked by 122.

It should be noted that during assembly, in one embodiment, the shaft and the sleeve will be held rotationally stationary with respect to each other such that the shaft will not turn with respect to the sleeve while pressing the sleeve onto the shaft. Hence, the sleeve will not be "screwed" onto the shaft. In this way, the contact point between the shaft and the ridges of the sleeve, will constantly change.

In another embodiment, the sleeve can be pushed onto the shaft while also turning the sleeve with respect to the shaft (or turning the shaft with respect to the sleeve). In this way, the sleeve can be at least partially screwed onto the shaft. In this case there is a risk that damage is made to the sleeve and/or to the shaft which causes imbalance. However due to the angled nature of the protrusions, the imbalance will be spread around the circumference of the sleeve to reduce the effect of the damage.

It is to be noted that in the embodiment shown in figures 7a, 7b + 8, the helical protrusions will also form venting channels between the inner surface of the inner cylindrical sleeve 100 and the outer surface of the shaft. This will allow air/fluid to pass the rotor assembly along the surface of the shaft and allow venting past the rotor assembly. In particular, depending on the angle of the protrusions, the protrusions can also provide a form of suction/pressure to pull/push fluid/air past the rotor to improve the venting. The protrusions will form a simple pump/fan due to the angled nature of the protrusions. This is in contrast to the protrusions of the prior art which extend parallel to the longitudinal axis of the sleeve. In the prior art case, the protrusions do not provide any momentum to the fluid venting past the rotor.

Figure 9 shows another embodiment 200 of a cylindrical mounting sleeve according to the invention. This sleeve 200 is very similar to the sleeve 100 shown in figures 7a and 7b. However, in this case, the sleeve 200 is made from a single piece of metal and therefore does not have a slot. In this case, the balance of the sleeve will be better than an embodiment with a slot. As with the previous embodiment, this sleeve 200 also has helical elongated depressions 202 on the outside which form helical elongated protrusions 204 on the inside.

In this case, since there is no slot and the inner cylindrical mounting sleeve is therefore also a sealed element, the inner cylindrical mounting sleeve can be used as an integral part of the sealed enclosure for the magnet assembly of the rotor. This is illustrated in figure 10 which shows one embodiment of a rotor assembly 210.

In this embodiment, the inner cylindrical mounting sleeve 200 is pressed onto the shaft 212. Then a cylindrical back iron portion 214 is provided on the sleeve and the magnet assembly 216 is provided around the back iron portion. In certain cases, the back iron portion could be removed completely. However, even in the case where a back iron portion is needed, since the back iron is also enclosed within the enclosure, it can be made from a cheaper material since it is not exposed to the fluid. An outer sleeve 218 is then added and annular side flanges 220 are added. The assembly is welded 222 as in the previous embodiment.

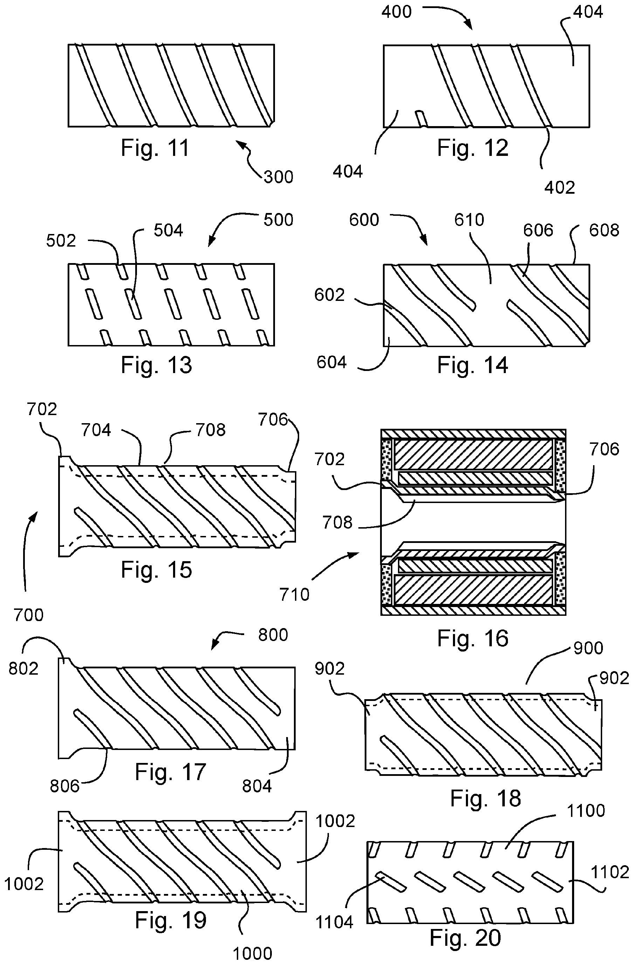

Figures 11 to 20 show some additional embodiments of cylindrical mounting sleeves according to the invention. As they share a number of features, the different embodiments will not be described in detail, but will be described by mentioning the differences to prior embodiments.

Figure 11 shows an embodiment 300 with a single helical depression/protrusion 302 which wraps around the entire sleeve from one end to the other. The angle formed by the depression/protrusion to the longitudinal axis is greater than in the prior described embodiments.

Figure 12 shows an embodiment of a sleeve 400 where the depression/protrusion 402 does not extend to the ends 404 of the sleeve. In this case both ends of the sleeve do not have a depression or a protrusion. As such, the end portions of the sleeve will not be in direct contact with the shaft. This is one way of ensuring that a good weld can be made between the sleeve and the annular side flanges.

Figure 13 shows an embodiment of a sleeve 500 where the depression/protrusion 502 is split into multiple segments 504. So instead of a single long helical depression/protrusion, in this embodiment, a number of individual depression/protrusion segments are provided. Together they still form a helical depression/protrusion which wraps around the entire sleeve from one end to the other.

Figure 14 shows an embodiment of a sleeve 600 where a number of helical depressions/protrusions 602 are arranged at one end 604 and another set of helical depressions/protrusions 606 are arranged at the other end 608 of the sleeve, but where the central portion 610 of the sleeve does not have any depressions/protrusions. In this way, the ends of the sleeve will form a tight grip on the shaft while the central portion will not be in contact with the shaft.

Figure 15 shows an embodiment of a sleeve 700 where one end (the left end in the figure) is formed with an outwardly protruding flange 702 such that the outer diameter and the inner diameter of the one end is greater than the outer diameter and inner diameter respectively of the central portion 704 of the sleeve. The other end of the sleeve 706 (the right end in the figure) has been compressed inwardly such that the outer diameter and the inner diameter of this end is less than the outer diameter and inner diameter respectively of the central portion. A number of helical depressions/protrusions 708 are wrapped around the sleeve as in the previous embodiments. Figure 16 shows a rotor assembly 710 with the sleeve from figure 15. The components are the same as in the embodiment disclosed in figure 10 and will not be described in detail here. The only difference being that one end 706 of the sleeve will be clamped to the shaft while the other end 702 is free of the shaft.

Figure 17 shows another embodiment of a cylindrical mounting sleeve 800. In this embodiment, one end is formed with an expanded flange 802 and the other end 804 is formed with a straight end, neither expanded nor compressed. The depression/protrusion 806 does not extend all the way to the ends of the sleeve on either end.

Figure 18 shows an embodiment of a cylindrical mounting sleeve 900 with two compressed ends 902. In this way, both ends will firmly clamp to the shaft when mounted on a shaft.

Figure 19 shows an embodiment of a cylindrical mounting sleeve 1000 with two expanded ends 1002. In this way, both ends will be free of the shaft and will provide good attachment surfaces for welding annular flanges to the sleeve.

Figure 20 shows an embodiment of a sleeve 1100 with straight ends 1102. Instead of a continuous depression/protrusion arranged around the circumference of the sleeve, in this case, a number of individual depression/protrusion segments 1104 with differing angles are provided spaced along the sleeve.

It should be noted that the features of the embodiments described above can be combined as desired even though they have not been expliclitly disclosed. It should also be noted that the current disclosure has provided some different embodiments of a cylindrical mounting sleeve with angled protrusions on the inside. This specification has also disclosed some embodiments of a rotor assembly with such a sleeve. The person skilled in the art will understand that additional embodiments of a cylindrical mounting sleeve could be provided in the future which have angled protrusions on the inside as well as additional beneficial features which are not disclosed in the current specification. Such embodiments of cylindrical mounting sleeves will also be comprised within the scope of protection of the current specification.

It is also to be noted that the figures and the above description have shown the example embodiments in a simple and schematic manner. Many of the specific mechanical details have not been shown since the person skilled in the art should be familiar with these details and they would just unnecessarily complicate this description. For example, the specific materials used and the specific manufacturing procedures have in many cases not been described in detail since it is maintained that the person skilled in the art would be able to find suitable materials and suitable processes to manufacture the sleeves and rotor assemblies according to the current invention.

## Claims

1. A cylindrical mounting sleeve suitable for mounting a rotor assembly on a shaft, said cylindrical mounting sleeve comprising a hollow cylindrical portion having a length L and an inner surface with a radius R, said cylindrical mounting sleeve further comprising at least one elongated protrusion formed on the inner surface, the elongated protrusion having a height H, **characterized in that** the path of the elongated protrusion forms an angle A to the longitudinal centre axis of the hollow cylindrical portion, said angle A being greater than 5 degrees and less than 70 degrees.

2. A cylindrical mounting sleeve according to claim 1, **characterized in that** the at least one elongated protrusion extends around at least 360 degrees of the inner surface of the cylindrical mounting sleeve..

3. A cylindrical mounting sleeve according to claim 1 or 2, **characterized in that** the cylindrical mounting sleeve comprises an outer surface having at least one elongated depression which correspond to the at least one elongated protrusion on the inner surface.

4. A cylindrical mounting sleeve according to claim 3, **characterized in that** the at least one elongated depression is pressed into the outer surface of the cylindrical mounting sleeve to form the at least one elongated protrusion on the inner surface of the cylindrical mounting sleeve.

5. A cylindrical mounting sleeve according to any one of claims 1 to 4, **characterized in that** the cylindrical mounting sleeve comprises a slit along the length of the cylindrical mounting sleeve.

6. A cylindrical mounting sleeve according to any one of claims 1 to 5, **characterized in that** the at least one elongated protrusion is formed as a helical path.

7. A cylindrical mounting sleeve according to any one of claims 1 to 6, **characterized in that** the cylindrical mounting sleeve comprises a plurality of elongated protrusions on the inner surface of the hollow cylindrical portion, said plurality of elongated protrusions being spaced around the circumference of the cylindrical mounting sleeve.

8. A cylindrical mounting sleeve according to any one of claims 1 to 7, **characterized in that** the elongated protrusion(s) are made up of spaced apart individual segments which together form an elongated protrusion.

9. A rotor assembly comprising a shaft, a magnet assembly and an enclosure around the magnet assembly, said enclosure being mounted to the shaft via a cylindrical mounting sleeve according to any one of claims 1 to 8.

10. A rotor assembly according to claim 9, **characterized in that** the enclosure is a sealed enclosure and **in that** the cylindrical mounting sleeve forms an integral component of the sealed enclosure.
